(19) Europäisches Patentamt
European Patent Office
Office européen des brevets

(11) **EP 2 216 604 B1**

(12) **EUROPÄISCHE PATENTSCHRIFT**

(45) Veröffentlichungstag und Bekanntmachung des Hinweises auf die Patenterteilung:
**10.08.2016 Patentblatt 2016/32**

(21) Anmeldenummer: **10151620.1**

(22) Anmeldetag: **26.01.2010**

(51) Int Cl.:
*F24J 2/46* (2006.01)     *F24D 3/06* (2006.01)
*F24D 3/10* (2006.01)     *F24D 19/10* (2006.01)

(54) **Verfahren und Vorrichtung zum Einstellen eines Solarfluiddrucks in Leitungen einer Solaranlage sowie eine Solaranlage**

Method and device for adjusting a solar fluid pressure in cables of a solar assembly and solar assembly

Procédé et dispositif de réglage de la pression d'un liquide solaire dans des conduites d'une installation solaire ainsi qu'une installation solaire

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **10.02.2009 DE 102009008263**

(43) Veröffentlichungstag der Anmeldung:
**11.08.2010 Patentblatt 2010/32**

(73) Patentinhaber: **Robert Bosch GmbH**
**70442 Stuttgart (DE)**

(72) Erfinder: **Boedeker, Hendrik**
**71229 Leonberg/Hoefingen (DE)**

(56) Entgegenhaltungen:
**EP-A2- 0 653 596     FR-A1- 2 437 579**
**US-A- 4 284 062**

EP 2 216 604 B1

**Beschreibung**

Die Erfindung betrifft ein Verfahren zum Einstellen eines Solarfluiddrucks in Leitungen einer Solaranlage nach dem Oberbegriff des Patentanspruches 1. Weiter betrifft die Erfindung eine Vorrichtung zur Einstellung eines Drucks in einer Solaranlage, insbesondere eines Solarfluiddrucks in Leitungen der Solaranlage, nach dem Oberbegriff des Anspruchs 8. Auch betrifft die Erfindung eine Solaranlage mit einem Leitungssystem, das von einem Solarfluid durchströmbar ist, nach dem Oberbegriff des Anspruchs 13.

Solarheizanlagen zum Erwärmen von Trinkwasser sind aus dem Stand der Technik bekannt. Derartige Solarheizanlagen verfügen über einen Solarheizkreis, durch den ein Solarfluid mittels einer Fördereinrichtung wie einer Pumpe gefördert wird. Das Solarfluid wird durch einen in den Solarheizkreis integrierten Solarkollektor gefördert. Beim Durchlauf durch den Solarkollektor wird das Solarfluid bei entsprechender Sonnenbestrahlung erwärmt. In den Solarheizkreis ist weiter ein Wärmespeicher integriert. Bei einer Inbetriebnahme der Solarheizanlage oder für Wartungszwecke muss das Solarfluid in den Solarheizkreis gefüllt werden oder auch nachgefüllt werden und eine Druckbeaufschlagung durchgeführt werden, um den Druck des Solarfluids in den Leitungen einzustellen. Hierzu werden zum Beispiel sogenannte Befüllstationen oder Solarbefüllstationen mit Pumpen verwendet.

Solaranlagen zur solarthermischen Energiegewinnung bestehen aus mehreren durchströmten Solarkollektoren, zum Beispiel auf dem Dach, und mindestens einem Vorratstank, meist im Keller. Die Solarkollektoren und der Vorratstank sind über Rohrleitungen verbunden. In der Regel wird kaltes Solarfluid von unten in den Solarkollektor gepumpt. Durch die einfallende Solarstrahlung wird das Solarfluid in dem Kollektor erwärmt. Das erwärmte Solarfluid wird zurück zum mit Brauchwasser befüllten Tank gepumpt, in dem sich üblicherweise ein Wärmetauscher befindet. Das Solarfluid gibt dort die Wärme an das Brauchwasser ab, ohne mit dem Brauchwasser in direkten Kontakt zu treten.

Bei heutigen Systemen sind die Leitungen im Kollektor sowie im Versorgungssystem üblicherweise aus Kupfer. Aktuell gibt es eine starke Tendenz, das Kupfer im Kollektor durch einen kostengünstigeren Kunststoff zu ersetzen. Der Einsatz der neuen Materialien bringt aber auch einige Nachteile mit sich, zum Beispiel eine insgesamt geringere mechanische Stabilität der Solaranlage und insbesondere der Leitungen. Zudem besteht die Gefahr, dass der Kunststoffkollektor, aber auch ein Kupterkollektor, bei sehr hohen Innendrücken möglicherweise Schaden nimmt. Der Druck im solarthermischen Kreislauf wird üblicherweise bei der Installation des Systems eingestellt. Wird die Druckangabe des Herstellers eingehalten, ist im Normalfall garantiert, dass der durch die dynamischen Prozesse während des Betriebs bedingte Druckanstieg zu keiner Beschädigung des Kollektors führt. Bei der Installation von solarthermischen Systemen ist es daher erforderlich, dass der Druck im Kollektor bei der Installation präzise eingestellt wird und eine kritische Grenze keinesfalls übersteigt.

Ein typischer Installationsprozess läuft wie folgt ab: Ein Installateur montiert die Rohrleitungen und die Solarkollektoren auf dem Dach und verbindet diese mit dem Vorratstank etc. zu einem Kreislauf. Anschließend wird eine Solarfüllstation angeschlossen, die mit einer leistungsstarken Pumpe ausgestattet ist. Letztere befördert das Solarfluid in die leeren Rohre, um die darin enthaltene Luft zu verdrängen. Dabei muss die Pumpe eine Arbeit gegen den statischen Höhendruck verrichten. Der Gegendruck an der Pumpe steigt an, bis das Fluid den höchsten Punkt erreicht hat. Kurz danach tritt aus dem offenen Ende des Solarkreislaufs ein Gemisch aus Luft und Solarfluid aus. Geschlossen wird das System, wenn am Auslass keine Luft mehr mit austritt.

An der Pumpe kann ein definierter Leitungsdruck eingestellt werden. Dieser entspricht der Summe aus dem Innendruck $p_i$ des Kollektors auf dem Dach und dem statischen Druck $p_s$ der Flüssigkeitssäule zwischen Pumpe und Kollektor. Da die Rohrleitungen zwischen Kollektor und Pumpe im Prinzip beliebig verlegt werden können, ist dem Installateur nicht bekannt, in welcher Höhe sich die Kollektoren im Gravitationsfeld über der Pumpe befinden. Somit ist ihm bei gegebenen $p_i$ nicht bekannt, welchen Pumpendruck $p_P = p_i + p_s$ er einstellen muss. Prinzipiell wäre es möglich, den Druck am Kollektor zu messen, dafür müsste jedoch dauerhaft ein Drucksensor integriert werden, der kostspielig und störanfällig ist. Alternativ könnte der Installateur einen Drucksensor einbauen und nach der Befüllung wieder entfernen, was mit zusätzlichem Arbeitsaufwand verbunden ist. In jedem Fall müsste der Installateur jedoch in der Lage sein, aus dem Keller des Hauses heraus den Drucksensor auszulesen. Mit den Vorrichtungen und Verfahren gemäß dem Stand der Technik ist somit eine präzise Einstellung des Solarfluiddrucks mit einfachen Mitteln nicht möglich.

Die FR 2437579 A1 offenbart eine Vorrichtung zur Einstellung eines Drucks in einer Solaranlage, umfassend eine Druckbeaufschlagungseinrichtung zum Druckbeaufschlagen eines die Leitungen der Solaranlage durchströmenden Solarfluids, wobei Referenzmittel an den Leitungen vorgesehen sind, um mindestens einen Referenzpunkt auszubilden.

Der Erfindung liegt die Aufgabe zugrunde, eine verbesserte Vorrichtung und ein verbessertes Verfahren zum präzisen Einstellen eines Druckes in den Leitungen einer Solaranlage zu schaffen. Insbesondere ist es eine Aufgabe der vorliegenden Erfindung, ein einfaches Verfahren und eine einfache Vorrichtung für die Druckregulierung bei der Installation eines solarthermischen Systems bereitzustellen, insbesondere für den Fall, dass auf dem Dach druckempfindliche Komponenten wie Kunststoffkollektoren vorhanden sind, die eine kritische Druckobergrenze für deren Innendruck aufweisen.

Erfindungsgemäß wird dies durch die Gegenstände mit den Merkmalen des Patentanspruches 1, des Patentanspruches 8 und des Patentanspruches 13 gelöst. Vorteilhafte Weiterbildungen sind den Unteransprüchen zu entnehmen.

Das erfindungsgemäße Verfahren zum Einstellen eines Solarfluiddrucks in Leitungen einer Solaranlage, umfassend ein Druckbeaufschlagen eines die Leitungen durchströmenden Solarfluids ist dadurch gekennzeichnet, dass das Druckbeaufschlagen mit variablem Druck durchgeführt wird, bis an einem Referenzpunkt ein Sollzustand erreicht und nach Erreichen des Sollzustands an dem Referenzpunkt ein Signal ausgegeben wird, sodass bei Erreichen des Sollzustands das Einstellen beendet wird.

In einer Ausführungsform des erfindungsgemäßen Verfahrens ist vorgesehen, dass mindestens der eine Referenzpunkt an den Leitungen im Vorfeld festgelegt wird. In einer anderen Ausführungsform der vorliegenden Erfindung ist vorgesehen, dass das Druckbeaufschlagen mit einer Pumpe durchgeführt wird, deren Ausgangsdruck erhöht wird, bis der Sollzustand erreicht wird.

In einer weiteren Ausführungsform der vorliegenden Erfindung ist vorgesehen, dass der Referenzpunkt an dem höchsten Punkt der Leitungen festgelegt wird. Noch eine weitere Ausführungsform der vorliegenden Erfindung sieht vor, dass der Referenzpunkt an einer beliebigen Stelle der Leitungen festgelegt wird und das Signal an die Pumpe geleitet wird.

Wiederum eine andere Ausführungsform der vorliegenden Erfindung sieht vor, dass das Solarfluid zu dem als unterbrochene Signalgebereinrichtung ausgebildeten Referenzpunkt gepumpt wird und so eine Überbrückung der unterbrochenen Signalgebereinrichtung durchgeführt wird, sodass dadurch die Signalgebereinrichtung ein Signal ausgibt. Das Solarfluid dient hier als Überbrückungsmittel.

Noch eine andere Ausführungsform der vorliegenden Erfindung sieht vor, dass das Solarfluid zu dem als unterbrechbare Signalgebereinrichtung ausgebildeten Referenzpunkt gepumpt wird und so eine Unterbrechung der unterbrechbaren Signalgebereinrichtung durchgeführt wird, sodass dadurch die Signalgebereinrichtung ein Signal ausgibt. Die Signalgebereinrichtung weist zumindest einen Abschnitt auf, der für eine Unterbrechung durch das Solarfluid ausgebildet ist.

Die erfindungsgemäße Vorrichtung zur Einstellung eines Drucks in einer Solaranlage entspricht dem Gegenstand des Anspruchs 8.

Eine Ausführungsform der vorliegenden Erfindung sieht vor, dass die Referenzmittel mindestens einen Sensor umfassen, ausgewählt aus der Gruppe der ducksensorfreien Sensoren, umfassend Temperatursensoren, Durchflusssensoren und optische Sensoren.

Noch eine weitere Ausführungsform der vorliegenden Erfindung sieht weiter vor, dass die Referenzmittel einen Leitungsumkehrabschnitt aufweisen, der an der höchsten Stelle der Leitungen ausgebildet ist.

Wieder eine andere Ausführungsform der vorliegenden Erfindung sieht vor, dass die Referenzmittel eine unterbrochene Signalgebereinrichtung umfassen, welche bei Erreichen des Sollzustands die Unterbrechung der Signalgebereinrichtung überbrücken, sodass durch eine Überbrückung ein Signal ausgegeben wird.

Zudem sieht eine weitere Ausführungsform der vorliegenden Erfindung vor, dass die Referenzmittel eine unterbrechbare Signalgebereinrichtung umfassen, welche bei Erreichen des Sollzustands die Unterbrechung der Signalgebereinrichtung bewirken, sodass durch die Unterbrechung ein Signal ausgegeben wird.

Die erfindungsgemäße Solaranlage mit einem Leitungssystem, das von einem Solarfluid durchströmbar ist, ist dadurch gekennzeichnet, dass eine erfindungsgemäße Vorrichtung vorgesehen ist.

Mit dem erfindungsgemäßen Verfahren und der erfindungsgemäßen Vorrichtung werden insbesondere die folgenden Vorteile realisiert: Die Erfindung liefert eine einfache und wenig aufwendige Lösung für das Einstellen eines Drucks in den Leitungen einer Solaranlage einschließlich des Drucks in dem Solarkollektor. Insbesondere ist die Lösung geeignet, den Druck am Solarkollektor hinreichend genau einzustellen, ohne an dem Solarkollektor, zum Beispiel auf dem Dach, einen Drucksensor integrieren zu müssen. Ein weiterer Vorteil ist, dass die Einstellung des korrekten Drucks zu einem wesentlichen Anteil über die angeschlossene Füllstation realisiert werden kann. Die Risiken einer fehlerhaften Bedienung durch den Installateur werden dadurch stark reduziert. Durch die präzise und fehlerfreie Einstellung ist es möglich, sensible Materialien als Leitungen zu verwenden, welche bei ungenauer Druckeinstellung beschädigt werden können. Da Hersteller üblicherweise Fehleinstellung berücksichtigen, geben diese einen geringeren zulässigen Druck für ein Solarfluid an. Durch die erfindungsgemäße Lösung ist es möglich, den Druck des Solarfluids in den Leitungen deutlich über den vom Hersteller angegebenen Solldruck einzustellen, ohne dass die Leitungskomponenten Schaden nehmen. Ein hoher Druck hat zwei Vorteile: erstens steigt durch den höheren Druck die Siedetemperatur des Solarfluids gegenüber einem niedrigeren Druckzustand an und zweitens weisen eingeschlossene Luftblasen bei einem höheren Druck ein geringeres Volumen auf, sodass die Gefahr von großen Luftansammlungen verringert ist.

Die Zeichnung stellt Ausführungsbeispiele der Erfindung dar und zeigt in den Figuren:

Fig. 1    schematisch in Fig 1 a und 1 b den Aufbau einer erfindungsgemäßen Solaranlage mit unterschiedlich angeordneten Leitungssystemen.

Fig. 2 schematisch einen Ausschnitt der Solaranlage mit der erfindungsgemäßen Vorrichtung,

Fig. 3 schematisch in Fig. 3a und 3b eine Ausführungsform von Referenzmitteln bei unterschiedlichen Befüllungsgraden,

Fig. 4 schematisch eine weitere Ausführungsform der Referenzmittel,

Fig. 5 schematisch in Fig. 5a und 5b noch eine weitere Ausführungsform der Referenzmittel bei unterschiedlichen Befüllungsgraden und

Fig. 6 schematisch in einem Diagramm einen zeitlichen Anstieg eines Pumpendrucks in Verbindung mit der Höhe des Solarfluids über der Pumpe und der Länge der bereits befüllten Leitung.

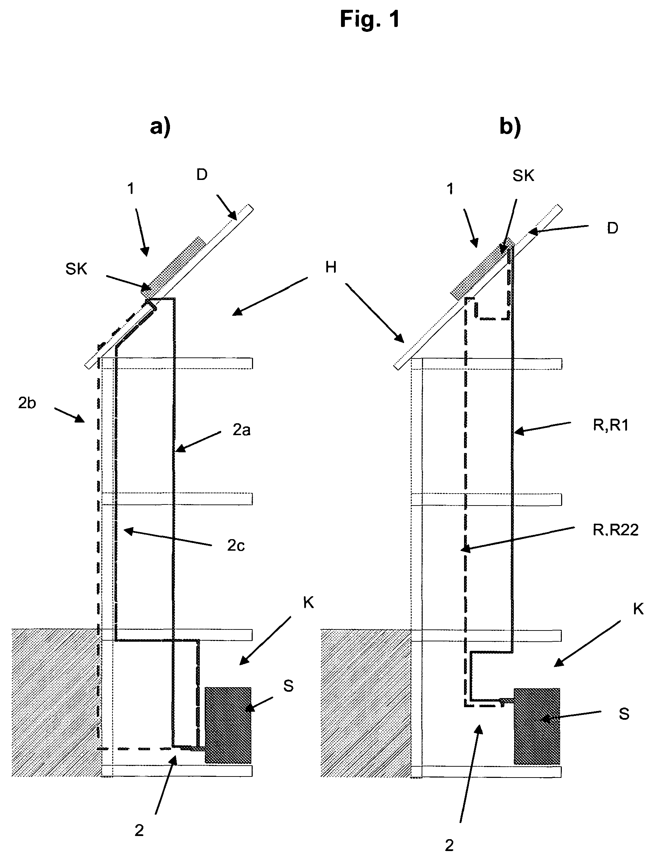

Fig. 1 zeigt schematisch in Fig 1 a einen Vorlauf und in 1 b einen Rücklauf einer erfindungsgemäßen Solaranlage 1 mit Alternativen für mögliche Leitungssysteme 2. Die unterschiedlichen Leitungssysteme 2 sind einmal mit durchgezogener Linie und einmal mit gestrichelter Linie dargestellt. Die Solaranlage 1 umfasst neben dem jeweiligen Leitungssystem 2 mindestens einen Solarkollektor SK, der auf einem Hausdach D eines hier nur ausschnittsweise dargestellten, mehrstöckigem Haus H angebracht ist. In einem Keller K des Hauses H ist ein Speicher S angeordnet. Das Leitungssystem 2 verbindet den Solarkollektor SK mit dem Speicher S fluidisch, sodass ein Solarfluidkreislauf realisiert ist, das heißt, ein Solarfluid F, das in dem Solarkollektor SK erwärmt wird, kann von dem Solarkollektor SK zu dem Speicher S zirkulieren. Das erste in Fig. 1a dargestellte Leitungssystem 2a weist eine Leitung L von dem Speicher S zu dem Solarkollektor SK auf, die im Wesentlichen als vertikale Verbindung durch das Haus H ausgebildet ist. Das zweite Leitungssystem 2b und das dritte Leitungssystem 2c weisen dagegen horizontale Leitungsabschnitte auf. In Fig 1b sind die Rückläufe R, das heißt die Leitungen L des Leitungssystems 2 von dem Solarkollektor SK zu dem Speicher S dargestellt. Der Rücklauf R1 verläuft monoton fallend zum Speicher S, während der Rücklauf R2 Zwischenabschnitte aufweist, die zwischendurch ansteigen, also nicht monoton fallend sind. Aus diesen unterschiedlichen Konzepten für die Verlegung von Rohrleitungen vom Speichertank zum Solarkollektor resultieren entsprechend unterschiedliche Leitungslängen. Entsprechend sind unterschiedliche Lösungen zur Umsetzung der Erfindung zu wählen, wie weiter unten im Text beschrieben wird.

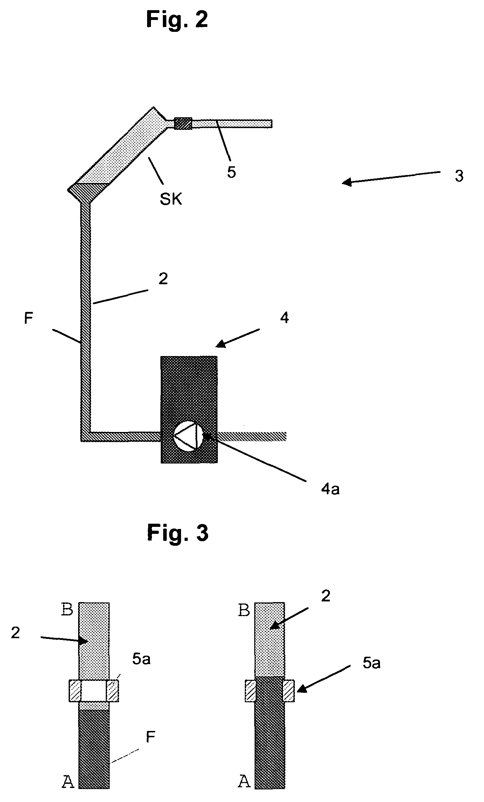

Fig. 2 zeigt schematisch einen Ausschnitt der Solaranlage 1 mit der erfindungsgemäßen Vorrichtung 3. Die Vorrichtung 3 umfasst neben einem Teil des Leitungssystems 2 eine als Füllstation ausgebildete Druckbeaufschlagungseinrichtung 4 mit Fördereinrichtung 4a, die hier als Pumpe ausgebildet ist. Weiter umfasst die Vorrichtung 3 Referenzmittel 5 zur Bildung mindestens eines Referenzpunktes. Die Referenzmittel 5 sind oberhalb des Solarkollektors SK an dessen Ausgang ausgebildet. Die Solaranlage 1 befindet sich in einem Zustand, in dem diese mit dem Solarfluid F befüllt wird. Das Solarfluid F ist zum Teil in den Solarkollektor SK eingefüllt, hat aber noch nicht dessen Ausgang erreicht.

Fig. 3 zeigt schematisch in Fig. 3a und 3b eine Ausführungsform der Referenzmittel 5 bei unterschiedlichen Befüllungsgraden. Die Referenzmittel 5 sind als unterbrochene Signalgebereinrichtung 5a ausgebildet. Fig. 3a zeigt einen Befüllungsgrad, bei dem das Solarfluid F die Referenzmittel 5 noch nicht erreicht hat. Fig. 3b zeigt einen Befüllungsgrad, bei dem das Solarfluid F die Referenzmittel 5 bereits passiert hat. In Fig. 3a teilt das Referenzmittel 5 die Leitung L in einen Abschnitt A, in Füllrichtung vor dem Referenzmittel 5, und in einen Abschnitt B, in Füllrichtung hinter dem Referenzmittel 5. Das als unterbrochene Signalgebereinrichtung 5a ausgebildete Referenzmittel 5 ist unterbrochen, sodass kein Signal ausgegeben wird. Die Unterbrechung kann durch einen nichtleitenden Abschnitt, zum Beispiel einem Luftraum, ausgebildet sein. In Fig. 3b hat das Solarfluid F das Referenzmittel 5 passiert und füllt den in Fig. 3a noch vorhandenen Luftraum mit Solarfluid F. Durch das Ausfüllen der Unterbrechung mit Solarfluid F wird eine Überbrückung der Unterbrechung realisiert, sodass die Signalgebereinrichtung 5a nicht länger unterbrochen ist und ein Signal ausgegeben wird. Die Unterbrechung der leitfähigen Verbindung zwischen den Punkten A und B kann durch ein beliebiges isolierendes Verbindungsstück gebildet werden. Hat das Solarfluid das Verbindungsstück passiert, besteht eine leitende Verbindung zwischen den Punkten.

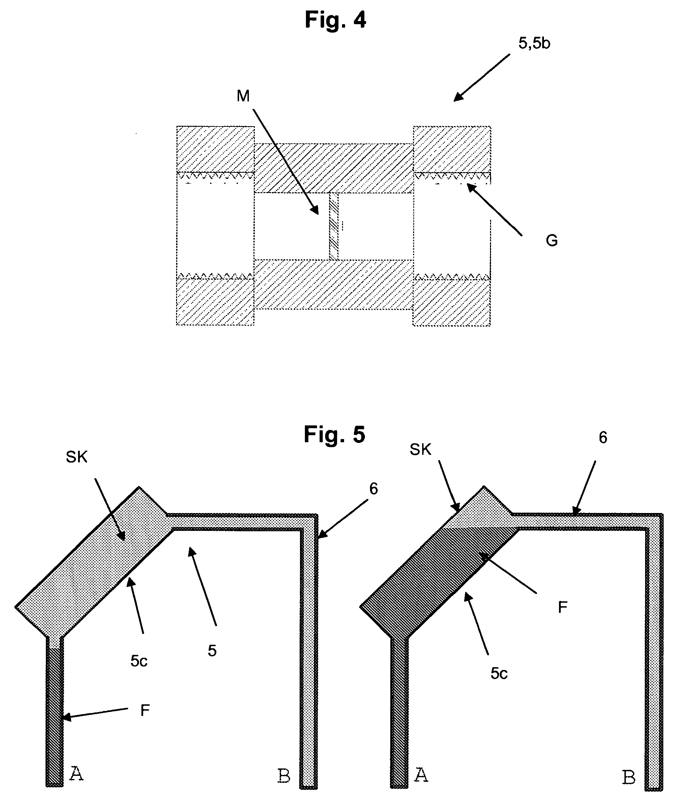

Fig. 4 zeigt schematisch eine weitere Ausführungsform der Referenzmittel 5. Die Referenzmittel 5 sind als Anschlussstück 5b am Kollektorausgang ausgebildet. Das Anschlussstück 5b verbindet zwei Leitungsabschnitte, den Solarkollektor SK und den Rückfluss R. Etwa in der Mitte blockiert eine Membran M einen Solarfluidfluss durch das Anschlussstück 5b. Bei ausreichendem Druck kann die Membran M durch das drückende Solarfluid F zerstört werden, sodass das Solarfluid F durch das Anschlussstück 5b strömen kann. Dieses Zerstören oder Strömen kann erfasst werden, zum Beispiel durch einen geeigneten Sensor. Entsprechend kann der Druck für die Solaranlage 1 eingestellt werden. Zum Anschluss an weitere Leitungsabschnitte können Gewinde G vorgesehen sein, mit denen das Anschlussstück 5b an den mit entsprechenden Gewinden versehenen Leitungsabschnitten angebracht werden kann.

Fig. 5 zeigt schematisch in Fig. 5a und 5b noch eine weitere Ausführungsform der Referenzmittel bei unterschiedlichen Befüllungsgraden. Die Referenzmittel 5 sind in dem Solarkollektor SK als Isolierung 5c ausgebildet. Unbefüllt, wie in Fig. 5a dargestellt, fungiert der Solarkollektor als Isolator zwischen den leitenden Leitungsabschnitten A und B. Die Leitungsabschnitte A und B können entweder selbst aus einem leitenden Material gebildet sein oder können Leiterelemente 6 umfassen. Wird der Solarkollektor mit dem Solarfluid befüllt, reduziert sich der Leitungswiderstand durch die Isolierung 5c, das heißt, die Isolierung 5c wird überbrückt. Dies kann direkt oder indirekt erfasst werden. Entsprechend wird bei der Überbrückung ein Signal ausgegeben, welches für die Druckeinstellung genutzt wird. Durch die Erkennung des Befüllungsgrades zum Beispiels mittels Leitfähigkeitsmessung bei isolierendem Kollektor wird in Fig. 5a ein hoher Widerstand zwischen den Punkten A und B bei geringer Befüllung festgestellt und in Fig. 5b ein niedriger Widerstand zwischen A und B durch Überbrückung der Isolation mittels Befüllung des Kollektors.

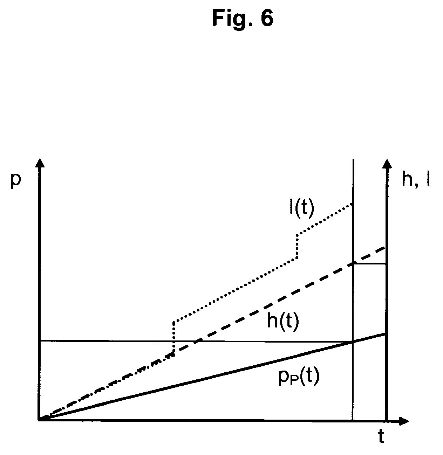

Fig. 6 zeigt schematisch in einem Diagramm einen zeitlichen Anstieg eines Pumpendrucks pp(t) in Verbindung mit einer Höhe h(t) des Solarfluids F über der Pumpe 4a und der Länge l(t) der bereits befüllten Leitung L. Auf der Abszisse ist die Zeit t eingetragen und auf der Ordinate entsprechend der Druck p, die Höhe h und die Länge I. Zusätzlich sind durch eine Vertikale und zwei Horizontale Hilfslinien zur Bestimmung des Referenzpunktes gekennzeichnet.

Der Pumpendruck $p_P(t)$ steigt von 0 kontinuierlich linear an. Die Höhe h(t) steigt ebenfalls kontinuierlich von 0 linear an, jedoch mit einer größeren Steigung als der Pumpendruck pP(t). Die Länge l(t) steigt nicht kontinuierlich, sondern mit Sprüngen von 0 an. Dabei entspricht die Länge l(t) bis zu einem ersten Sprung vertikal nach oben dem entsprechenden Höhenverlauf. Das heißt, eine Steigung des Längenverlaufs entspricht außer an den Sprüngen der des Höhenverlaufs. Mit der Anzahl der Sprünge nimmt die Differenz von Höhenverlauf und Längenverlauf zu. Die Sprünge im Längenverlauf können durch entsprechende Leitungsabschnitte realisiert sein, beispielsweise durch Leitungsabschnitte, bei denen ein Umlenkungspunkt überwunden wird, sodass ohne weitere Druckerhöhung ein Leitungsabschnitt bis zu einem nächsten Umlenkungspunkt gefüllt wird. Zur Einstellung des Drucks ist es erforderlich, dass der Druck an demjenigen Punkt detektiert wird, an dem sich der Übergang zwischen Fluid und Luft am Referenzpunkt befindet. Dies ist durch die dünnen durchgezogenen Linien dargestellt.

Die Erfindung ist im Folgenden zusammengefasst beschrieben:

Die Erfindung umfasst verschiedene Ausführungsformen des erfindungsgemäßen Verfahrens zum Einstellen eines Solarfluiddrucks in Leitungen 2 einer Solaranlage 1, welches auch zur Befüllung des solarthermischen Systems geeignet ist, wobei sich die Ausführungsformen unter anderem hinsichtlich ihrer Komplexität, ihrem Anwendungsbereich und hinsichtlich ihrer Genauigkeit unterscheiden. Allen Ausführungsformen ist die Idee gemein, dass eine vom Installateur genutzt Füllstation mit einer Pumpe versehen ist, die einen variablen Ausgangsdruck erzeugen kann. Wird die Befüllung des Systems gestartet, pumpt die Pumpe nicht mit einem zeitlich konstanten Druck, sondern der Ausgangsdruck wird langsam und monoton über die Zeit erhöht. Eine Zeitskala für diese Erhöhung wird so gewählt, dass während der Befüllung $p_P = p_s$ gilt, d. h., der statische Druck an der Pumpe ist gleich dem Gegendruck der Pumpe. Klar ist somit Folgendes: Erreicht der Stand des Solarfluids (F) im System den Kollektor-Referenzpunkt und gilt zu diesem Zeitpunkt $p_P = p_s = p_R$, so muss im verschlossenen System der Druck $p_i + p_R$ eingestellt werden. Eine Aufgabe liegt somit darin, an der Pumpe denjenigen Druck zu demjenigen Zeitpunkt zu bestimmen, an dem der Fluidstand im System den Referenzpunkt erreicht. In diesem Punkt unterscheiden sich die im Folgenden ausgeführten Ausführungsformen des Verfahrens und der Vorrichtung.

Die einfachste, in Fig. 2 schematisch dargestellte Ausführungsform kann angewendet werden, wenn der Referenzpunkt für den Druck etwa mit dem höchsten Punkt des Systems übereinstimmt und eine Fluidrückführung monoton in Richtung des Gravitationsfeldes verläuft. Zudem sollte der Pumpendruck bei dieser Ausführungsform sehr langsam erhöht werden. In diesem Fall kann visuell oder z. B. kapazitiv, über Widerstandsmessung und zahlreiche andere Arten, beobachtet werden, wann das Solarfluid (F) aus dem unteren Auslass austritt. Aufgrund der zeitlichen Nähe von Austreten und Erreichen des höchsten Punktes entspricht der Druck an der Pumpe in guter Näherung dem gesuchten statischen Druck. Getriggert durch den Installateur oder die Detektion kann die Pumpstation diesen nun auslesen.

Die zweite, in Fig. 3 dargestellte Ausführungsform weist den Vorteil auf, dass der Punkt für den Referenzdruck überall in dem Leitungssystem liegen kann und ein schnellerer PumpProzess möglich ist. Es ist jedoch erforderlich, dass vom Referenzpunkt zwei getrennte elektrisch leitende Verbindungen zur Pumpstation bestehen. Dies ist im allgemeinen z. B. dann der Fall, wenn für den Anschluss der Kollektoren elektrisch leitende Rohre, z. B. aus Kupfer oder anderen Metallen, verwendet werden. Sollten die metallischen Rohre durchgehend verbunden sein, kann die elektrische Verbindung durch einfaches isolierendes Verbindungsstück in zwei Teile aufgetrennt werden. Ein Prinzip dieses Ausführungsbeispiel ist nun, dass der hohe Widerstand zwischen den beiden Leiterteilen schlagartig reduziert wird und z. B. auf fast Null fällt, wenn das Solarfluid (F) als leitfähiges Medium beide Teile des Referenzpunktes benetzt. Dieser Abfall des Widerstands kann an der Füllstation relativ einfach detektiert werden. Für den ungünstigen Fall, dass das Kollektorfeld komplett elektrisch isolierend ist und auch ein nichtleitender Halterahmen verwendet wird, ist ein möglicher Referenzpunkt immer der obere Rand des Kollektorfelds, an dem wieder ein Metallrohr angeschlossen ist.

Die dritte Ausführungsform ist konzeptuell sehr einfach und erlaubt eine schnelle Druckerhöhung an der Pumpe. Erforderlich für die Anwendung ist, dass am Kollektor ein Temperatursensor oder eine andere Art von Sensor angebracht wird. Der Punkt des Sensors wird dann als Referenzpunkt verwendet. Ist der bestehende Sensor ein Temperatursensor, so wird dieser vor der Befüllung eine bestimmte Temperatur annehmen, um einen entsprechenden Messwert an die Solarstation melden zu können. Befüllt man den Kollektor mit Solarfluid, wird dieses allgemein eine andere Temperatur als der leere Kollektor haben. Beispielsweise kann der Kollektor mit heißem Solarfluid gefüllt werden, um Lufteinschlüsse zu minimieren. Das Benetzen des Sensors mit Fluid geht dann mit einem Temperatursprung einher, der einfach detektiert werden kann. Sollte es sich bei dem installierten Sensor nicht um einen Temperatursensor oder einen anderen Sensor handeln, der das Benetzen mit Fluid detektieren kann, ist dennoch eine einfache Nutzung möglich. Der Grund hierfür besteht darin, dass für den Anschluss eines jeden Sensors, auch ohne Funkübertragung, zwei getrennte elektrische Leitungen verwendet werden müssen. Demgemäß kann eine Leitung aufgetrennt und die entsprechenden Enden in die Rohrleitung gelegt werden, sodass beim Benetzen eine leitfähige Verbindung zustande kommt.

Die vierte, in Fig. 4 dargestellte Ausführungsform funktioniert mit einem sehr schnellen Pumpprozess, beliebigen Rohren und einem beliebigem Referenzpunkt oberhalb des Kollektorfeldes bei beliebig geformter Rückleitung, weist aber eine etwas geringere Genauigkeit und erhöhte Anforderungen an die verwendeten Bauteile auf. Zentrales Element des Prinzips ist ein speziell konzipiertes Anschlussstück, das am Referenzpunkt installiert wird. Neben den Elementen eines normalen Verbinders enthält es eine Membran, ein Überdruckventil oder ein ähnliches Element, das den Durchgang von Solarfluid und Luft durch den Verbinder unterbindet. Beginnt der Installateur, mittels der Solarstation Solarfluid in das Rohrleitungssystem zu pumpen, kann die Luft nicht wie bei den anderen Konzepten direkt verdrängt werden. Stattdessen wird die Luft zwischen Solarfluid und Membran wie eine Feder komprimiert. Dabei steigen Dichte und Druck entsprechend an.

Daraus ergibt sich folgender Aspekt: Der statische Druck berechnet sich allgemein gemäß $p_s = \rho\, g\, h$. Dabei ist h die Höhe im Gravitationsgeld, $\rho$ die Dichte der Substanz und g die Gravitationskonstante. Da die Dichte der Substanz für Luft sehr gering ist gegenüber zum Beispiel der Dichte von Wasser, kann eine Druckänderung in einer Luftfeder durch die Höhe im Prinzip vernachlässigt werden. Drückt das Solarfluid somit mit dem Druck $p_F$ auf die Luftfeder, wird dieser Druck direkt auf die Membran weitergegeben. Somit gilt im Gleichgewicht: $p_P = p_F + p_s = p_M + p_s$, wobei der Index M die Membran bezeichnet.

Als Zweites ist von Interesse, wie hoch das Solarfluid F tatsächlich über der Pumpe 4a steht. Sei dazu der normale Luftdruck $p_0$, $V_{coll}$ das Volumen der Kollektoren und $V_{pipe}$ das Volumen der Leitung von der Pumpe zum Kollektor. Geht man von den bereits ungünstig gewählten Parametern $D_{pipe} = 15$ mm, $l_{pipe} = 20$ m aus und $V_{coll} = 4$ Liter aus, so erkennt man, dass in allen praktischen Situationen das Volumen in der Leitung $V_{pipe} \leq V_{coll}$ gilt. Wendet man jetzt die allgemeine Gasgleichung bei konstanter Temperatur an (pV = konstant), so gilt für das Luftvolumen $V_{air}$

$$V_{air} = \frac{p_0}{p_0 + p_M}(V_{coll} + V_{pipe}) \leq \frac{2 p_0 V_{coll}}{1 + \frac{p_M}{p_0}} \leq V_{coll}$$

für $p_M \geq p_0$. Anders ausgedrückt: Entspricht der Überdruck auf der Membran dem Umgebungsdruck, so befindet sich die Kontaktfläche von Solarfluid F und Luft innerhalb des Kollektors. Man kann sogar die exakte Lage bestimmen, wenn die Anzahl der Kollektoren und die Länge der verlegten Rohrleitung bekannt sind.

Für die Befüllung wird die Luftfeder im Kollektor SK immer weiter komprimiert. Das Verbinderelement wird jetzt so ausgelegt, dass das Verbinderelement bei einem definierten Druck öffnet (z. B. durch Bersten der Membran oder Öffnen des Überdruckventils). Im Moment des Öffnens entspricht der Innendruck am Übergang von Luft zu Solarfluid F dem zum Öffnen nötigen Druck. Die komprimierte Luft entweicht jetzt sehr schnell, was sich sowohl akustisch als auch durch einen starken Druckabfall an der Pumpe feststellen lässt. Der entsprechende Zeitpunkt kann durch den Installateur registriert oder durch die Pumpe detektiert werden.

Für die praktische Anwendung des beschriebenen Verfahrens ist es wichtig, dass das Verbinderelement nach dem Öffnen den Fluidfluss nicht mehr behindert. Im Fall eines berstenden Elements sollen keine Elemente im Fluidsystem zurückbleiben, die eine Verstopfung oder ähnliches bedingen können. Eine Möglichkeit hierfür besteht in der Verwendung einer klassischen Berstscheibe, wie sie z. B. in Sicherheitsventilen eingesetzt wird. Alternativ kann eine Kunststoffmembran verwendet werden. Löst sich dieser zudem noch in polaren Lösungsmitteln auf, verbleiben nach dem Bersten langfristig keine festen Reste im System. Falls ein Überdruckventil verwendet wird, sollte der Druck leicht höher als der Öffnungsdruck eingestellt werden, um ein periodisches Öffnen und Schließen des Ventils zu verhindern.

Alle beschriebenen Maßnahmen bzw. Ausführungsformen müssen bei der Befüllung des Systems nur einmal durchgeführt werden. Der zugehörige Druck und die daraus einfach zu berechnende Höhe des Referenzpunktes über der Pumpstation können dokumentiert oder von der Füllstation gespeichert werden. Anschließend ist es immer noch möglich, den Massenstrom der Füllstation kurzzeitig stark zu erhöhen, um beispielsweise Luftbläschen aus dem System zu spülen. Eine voll automatisierte Füllstation könnte am Ende des Prozesses auch noch den Gegendruck im Druckausgleichsgefäß des Rohrsystems einstellen, alternativ dazu kann dies natürlich auch über den Installateur gemäß Angaben der Füllstation geschehen. Ändern sich Referenzpunkt und Lage der Pumpe nicht, bleiben die Werte auch bei späteren Modifikationen am System gültig.

**Patentansprüche**

1.  Verfahren zum Einstellen eines Solarfluiddrucks in Leitungen (2) einer Solaranlage (1), umfassend ein Druckbeaufschlagen eines die Leitungen (2) durchströmenden Solarfluids (F),
    **dadurch gekennzeichnet, dass** das Druckbeaufschlagen mit variablem Druck durchgeführt wird, bis an einem Referenzpunkt ein Sollzustand erreicht und nach Erreichen des Sollzustands an dem Referenzpunkt ein Signal ausgegeben wird, sodass bei Erreichen des Sollzustands das Einstellen beendet wird.

2.  Verfahren nach Anspruch 1,
    **dadurch gekennzeichnet, dass** mindestens der eine Referenzpunkt an den Leitungen (2) im Vorfeld festgelegt wird.

3.  Verfahren nach Anspruch 1 oder 2,
    **dadurch gekennzeichnet, dass** das Druckbeaufschlagen mit einer Pumpe durchgeführt wird, deren Ausgangsdruck erhöht wird, bis der Sollzustand erreicht wird.

4.  Verfahren nach einem der Ansprüche 1 bis 3,
    **dadurch gekennzeichnet, dass** der Referenzpunkt an dem höchsten Punkt der Leitungen (2) festgelegt wird.

5.  Verfahren nach Anspruch 3 oder nach den Ansprüchen 3 und 4.
    **dadurch gekennzeichnet, dass** der Referenzpunkt an einer beliebigen Stelle der Leitungen (2) festgelegt wird und das Signal an die Pumpe geleitet wird.

6.  Verfahren nach einem der Ansprüche 1 bis 5,
    **dadurch gekennzeichnet, dass** das Solarfluid (F) zu dem als unterbrochene Signalgebereinrichtung ausgebildeten Referenzpunkt gepumpt wird und so eine Überbrückung der unterbrochenen Signalgebereinrichtung durchgeführt wird, sodass dadurch die Signalgebereinrichtung ein Signal ausgibt.

7.  Verfahren nach einem der Ansprüche 1 bis 5,
    **dadurch gekennzeichnet, dass** das Solarfluid (F) zu dem als unterbrechbare Signalgebereinrichtung ausgebildeten Referenzpunkt gepumpt wird und so eine Unterbrechung der unterbrechbaren Signalgebereinrichtung durchgeführt wird, sodass dadurch die Signalgebereinrichtung ein Signal ausgibt.

8.  Vorrichtung zur Einstellung eines Drucks in einer Solaranlage, insbesondere eines Solarfluiddrucks in Leitungen der Solaranlage, umfassend eine Druckbeaufschlagungseinrichtung zum Druckbeaufschlagen eines die Leitungen durchströmenden Solarfluids (F),
    wobei an Leitungen anordenbare Referenzmittel vorgesehen sind, um mindestens einen Referenzpunkt auszubilden,
    und wobei mindestens ein Mittel umfasst ist, das dazu geeignet ist, ein Verfahren zum Einstellen eines Solarfluiddrucks in Leitungen einer Solaranlage durchzuführen, umfassend ein Druckbeaufschlagen eines die Leitungen durchströmenden Solarfluids.
    **dadurch gekennzeichnet, dass**
    die Druckbeaufschlagungseinrichtung als variable Druckbeaufschlagungseinrichtung zum Variieren eines Ausgangsdrucks ausgebildet ist, um das Druckbeaufschlagen mit variablem Druck durchzuführen, und dass das mindestens eine Mittel dazu geeignet ist, ein Verfahren nach einem der Ansprüche 1 bis 7 durchzuführen, das heißt dazu geeignet ist, das Druckbeaufschlagen mit variablem Druck durchzuführen, bis an einem Referenzpunkt ein Sollzustand erreicht und nach Erreichen des Sollzustands an dem Referenzpunkt ein Signal ausgegeben wird, sodass bei Erreichen des Sollzustands das Einstellen beendet wird.

9.  Vorrichtung (3) nach Anspruch 8,
    **dadurch gekennzeichnet, dass** die Referenzmittel (5) mindestens einen Sensor umfassen, ausgewählt aus der Gruppe der ducksensorfreien Sensoren, umfassend Temperatursensoren, Durchflusssensoren und optische Sensoren.

10. Vorrichtung (3) nach Anspruch 8 oder 9,

**dadurch gekennzeichnet, dass** die Referenzmittel) (5) einen Leitungsumkehrabschnitt aufweisen, der an der höchsten Stelle der Leitungen (2) ausgebildet ist.

11. Vorrichtung (3) nach einem der Ansprüche 8 bis 10,
**dadurch gekennzeichnet, dass** die Referenzmittel (5) eine unterbrochene Signalgebereinrichtung umfassen, welche bei Erreichen des Sollzustands die Unterbrechung der Signalgebereinrichtung überbrücken, sodass durch eine Überbrückung ein Signal ausgegeben wird.

12. Vorrichtung (3) nach einem der Ansprüche 8 bis 11.
**dadurch gekennzeichnet, dass** die Referenzmittel (5) eine unterbrechbare Signalgebereinrichtung umfassen, welche bei Erreichen des Sollzustands die Unterbrechung der Signalgebereinrichtung bewirken, sodass durch die Unterbrechung ein Signal ausgegeben wird.

13. Solaranlage (1) mit einem Leitungssystem (2), das von einem Solarfluid (F) durchströmbar ist,
**dadurch gekennzeichnet, dass** eine Vorrichtung (3) nach einem der vorherigen Ansprüche 8 bis 12 vorgesehen Ist.


**Claims**

1. Method for adjusting a solar fluid pressure in lines (2) of a solar system (1), comprising pressurizing a solar fluid (F) flowing through the lines (2),
**characterized in that** the pressurizing is carried out with variable pressure until a desired state is reached at a reference point and, after reaching the desired state at the reference point, a signal is emitted, so that the adjustment is ended when the desired state is reached.

2. Method according to Claim 1,
**characterized in that** at least one reference point is fixed on the lines (2) in advance.

3. Method according to Claim 1 or 2,
**characterized in that** the pressurizing is carried out with a pump, the output pressure of which is increased until the desired state is reached.

4. Method according to one of Claims 1 to 3,
**characterized in that** the reference point is fixed at the highest point of the lines (2).

5. Method according to Claim 3 or according to Claims 3 and 4,
**characterized in that** the reference point is fixed at any desired point of the lines (2) and the signal is passed to the pump.

6. Method according to one of Claims 1 to 5,
**characterized in that** the solar fluid (F) is pumped to the reference point, which is formed as an interrupted signal transmitter device, and thus a bridging of the interrupted signal transmitter device is carried out, so that as a result the signal transmitter device emits a signal.

7. Method according to one of Claims 1 to 5,
**characterized in that** the solar fluid (F) is pumped to the reference point formed as an interruptible signal transmitter device, and thus an interruption of the interruptible signal transmitter device is carried out, so that as a result the signal transmitter device emits a signal.

8. Device for adjusting a pressure in a solar system, in particular a solar fluid pressure in lines of the solar system, comprising a pressurizing device for pressurizing a solar fluid (F) flowing through the lines,
wherein reference means that can be arranged on lines are provided, in order to form at least one reference point, and wherein at least one means suitable for carrying out a method for adjusting a solar fluid pressure in lines of a solar system is comprised, the method comprising pressurizing a solar fluid flowing through the lines,
**characterized in that**
the pressurizing device is formed as a variable pressurizing device for varying an output pressure, in order to carry out the pressurizing with variable pressure, and **in that** the at least one means is suitable for carrying out a method according to one of Claims 1 to 7, that is to say is suitable for carrying out the pressurizing with variable pressure until a desired state is reached at a reference point and, after reaching the desired state at the reference point, a signal is emitted, so that the adjustment is ended when the desired state is reached.

9. Device (3) according to Claim 8,
   **characterized in that** the reference means (5) comprise at least one sensor, selected from the group of pressure-sensor-free sensors, comprising temperature sensors, flow sensors and optical sensors.

10. Device (3) according to Claim 8 or 9,
    **characterized in that** the reference means (5) have a line reversing portion, which is formed at the highest point of the lines (2).

11. Device (3) according to one of Claims 8 to 10,
    **characterized in that** the reference means (5) comprise an interrupted signal transmitter device, which bridge the interruption of the signal transmitter device when the desired state is reached, so that a signal is emitted as a result of a bridging.

12. Device (3) according to one of Claims 8 to 11,
    **characterized in that** the reference means (5) comprise an interruptible signal transmitter device, which bring about the interruption of the signal transmitter device when the desired state is reached, so that a signal is emitted as a result of the interruption.

13. Solar system (1) with a system of lines (2) that can be flowed through by a solar fluid (F), **characterized in that** a device (3) according to one of the preceding Claims 8 to 12 is provided.

**Revendications**

1. Procédé de réglage d'une pression de fluide solaire dans les conduites (2) d'une installation solaire (1), comprenant une mise en pression d'un fluide solaire (F) qui circule dans les conduites (2), **caractérisé en ce que** la mise en pression est effectuée avec une pression variable jusqu'à ce qu'un état voulu soit atteint à un point de référence et un signal est délivré après avoir atteint l'état voulu au point de référence, de sorte que le réglage prenne fin en atteignant l'état voulu.

2. Procédé selon la revendication 1, **caractérisé en ce qu'**au moins le point de référence est défini à l'avance sur les conduites (2).

3. Procédé selon la revendication 1 ou 2, **caractérisé en ce que** la mise en pression est effectuée avec une pompe dont la pression initiale est augmentée jusqu'à ce que l'état voulu soit atteint.

4. Procédé selon l'une des revendications 1 à 3, **caractérisé en ce que** le point de référence est défini au point le plus haut des conduites (2).

5. Procédé selon la revendication 3 ou selon les revendications 3 et 4, **caractérisé en ce que** le point de référence est défini en un endroit quelconque des conduites (2) et le signal est acheminé à la pompe.

6. Procédé selon l'une des revendications 1 à 5, **caractérisé en ce que** le fluide solaire (F) est pompé vers le point de référence, réalisé sous la forme d'un appareil générateur de signal interrompu, et un pontage de l'appareil générateur de signal interrompu est ainsi effectué, de sorte que l'appareil générateur de signal délivre ainsi un signal.

7. Procédé selon l'une des revendications 1 à 5, **caractérisé en ce que** le fluide solaire (F) est pompé vers le point de référence, réalisé sous la forme d'un appareil générateur de signal interruptible, et une interruption de l'appareil générateur de signal interruptible est ainsi effectuée, de sorte que l'appareil générateur de signal délivre ainsi un signal.

8. Dispositif de réglage d'une pression dans une installation solaire, notamment d'une pression de fluide solaire dans les conduites de l'installation solaire, comprenant un appareil de mise en pression destiné à mettre en pression un fluide solaire (F) qui circule dans les conduites,
   des moyens de référence pouvant être disposés sur les conduites étant présents afin de former au moins un point de référence,

et au moins un moyen étant inclus, lequel est conçu pour mettre en oeuvre un procédé de réglage d'une pression de fluide solaire dans les conduites d'une installation solaire, comprenant une mise en pression d'un fluide solaire qui circule dans les conduites, **caractérisé en ce que**

l'appareil de mise en pression est réalisé sous la forme d'un appareil de mise en pression variable destiné à faire varier une pression initiale afin d'effectuer la mise en pression avec une pression variable, et **en ce que** l'au moins un moyen est conçu pour mettre en oeuvre un procédé selon l'une des revendications 1 à 7, c'est-à-dire conçu pour effectuer la mise en pression avec une pression variable jusqu'à ce qu'un état voulu soit atteint à un point de référence et un signal est délivré après avoir atteint l'état voulu au point de référence, de sorte que le réglage prenne fin en atteignant l'état voulu.

9.  Dispositif (3) selon la revendication 8, **caractérisé en ce que** les moyens de référence (5) comprennent au moins un capteur choisi dans le groupe des capteurs exempts de capteur de pression, incluant les capteurs de température, les capteurs de débit et les capteurs optiques.

10. Dispositif (3) selon la revendication 8 ou 9, **caractérisé en ce que** les moyens de référence (5) possèdent une portion de retournement de conduite qui est formée à l'emplacement le plus haut des conduites (2).

11. Dispositif (3) selon l'une des revendications 8 à 10, **caractérisé en ce que** les moyens de référence (5) comprennent un appareil générateur de signal interrompu qui pontent l'interruption de l'appareil générateur de signal interrompu lorsque l'état voulu est atteint, de sorte qu'un signal soit délivré du fait du pontage.

12. Dispositif (3) selon l'une des revendications 8 à 11, **caractérisé en ce que** les moyens de référence (5) comprennent un appareil générateur de signal interruptible qui provoquent l'interruption de l'appareil générateur de signal lorsque l'état voulu est atteint, de sorte qu'un signal soit délivré du fait de l'interruption.

13. Installation solaire (1) comprenant un système de conduites (2) dans lequel peut circuler un fluide solaire (F), **caractérisée en ce qu'**il existe un dispositif (3) selon l'une des revendications 8 à 12.

# Fig. 1

**a)**

**b)**

# Fig. 2

# Fig. 3

## Fig. 4

## Fig. 5

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2437579 A1